# EUROPEAN PATENT SPECIFICATION

(11) **EP 4 210 479 B1**
(45) Date of publication and mention of the grant of the patent: **08.07.2026**
(21) Application number: 21867210.3
(22) Date of filing: 10.09.2021
(51) Int. Cl.: A01K 61/60, A01K 61/10

(54) **A FISH FARMING FACILITY COMPRISING A CONTROLLABLE ENCLOSURE**
FISCHZUCHTANLAGE MIT STEUERBAREM GEHÄUSE
INSTALLATION DE PISCICULTURE COMPRENANT UNE ENCEINTE COMMANDABLE

(30) Priority: 10.09.2020 NO 20200994
(43) Date of publication of application: 19.07.2023
(73) Proprietor: SFS Group AS, 4033 Stavanger (NO)
(72) Inventor: SANDSTAD, Alf Reidar, 4020 Stavanger (NO)
(74) Representative: Håmsø Patentbyrå AS
(86) International application number: PCT/NO2021/050188
(87) International publication number: WO 2022/055359

(56) References cited:
- FR-A1- 2 639 511
- JP-A- H09 103 219
- NO-A1- 20 171 837
- NO-A1- 20 172 017
- NO-B- 158 201
- US-A1- 2020 015 460

## Description

The present invention relates to a floating fish farming facility. More specifically, the disclosure relates to a floating fish farming facility with an enclosure comprising a motor, where the motor powers a controlled up and down movement of the enclosure.

### BACKGROUND

Fish farming or pisciculture involves raising fish commercially in enclosures for food. Floating fish farming facilities are well known, and many different types exist such as e.g. floating net pens. The net pens may be anchored to the sea bottom. Floating fish farming facilities may typically comprise an enclosure for fish that is open or exposed to air at an upper portion. The sidewalls and base of the enclosure may be water permeable in order to allow water to flow into and out of the enclosure, while preventing the farmed fish from escaping and preventing organisms from the surrounding water to enter the enclosure. Further, the enclosure may be supported by a floating collar to maintain the enclosure in the body of water, and to support the sidewalls above the surface of the water in case the upper portion is open.

Floating fish farming facilities may be located in fjords and close to the shore, or out at sea. Large scale fish farming facilities at sea comprise flexible enclosures that are water permeable to reduce impacts from waves. Floating fish farming facilities located closer to shore may advantageously comprise a rigid and water impermeable sidewall and base, in order to reduce contamination of the water in the enclosure, from the water outside the enclosure, and to better collect dirt and waste from the fish farming facility.

Due to the nature of fish farming, the enclosure is constantly exposed to dirt and nutritious waste that accumulates growth of algae and plankton on the enclosure. The enclosure is thus in regularly need of wash, disinfection, and maintenance. This can be done either under water or above water. If to be done above water, the enclosure needs to be lifted above the surface of the water. A number of devices exist that are aimed at cleaning the enclosure under water, and also several systems for lifting the enclosure above the surface of the water. A fish farming facility comprising an enclosure that can be lifted out of the water may also be easier to transport while out at sea.

Floatable fish farming facilities comprising an enclosure that can be lifted either have a ballast system that can provide positive buoyancy to the enclosure, or they have the motor positioned on a floating collar arranged around the enclosure or elsewhere distant to the enclosure. Power supply to the motor might be from shore or from feeding barges, etc. This way of arranging the lifting equipment is logical in order not to add extra forces from the motor or weight from the motor to the enclosure to be lifted. However, the floating collar is commonly not intended to accommodate personnel, and as the power generation or power distribution centre is located on the enclosure itself, it is both costly and complicated to arrange power supply to the motor as it would require the use of swivels or cables hanging in a lazy U configuration to handle the distance from the supply and down to the motor during the lift. A high level of wear and tear is also common on lifting equipment arranged on the floating collar.

Documents useful for understanding the field of technology include WO 2006/004415 A1 (corresponding to Norwegian patent application no. 20042778), which describes a container for location in the sea for collection of fluids, masses or mixtures of objects and fluids, with a specific weight which is not substantially different from seawater, with a cylindrical shape and arranged for location with the longitudinal axis in vertical direction, and where its sidewalls are assembled of sheet elements which are joined along their side edges forming a shell construction.

EP 3442330 A4 (corresponding to Norwegian patent application no. 20172017) describes a floating fish farming plant including a cage supported by a buoyant body which is configured for floating in a body of water. The farming plant further includes a lifting portion arranged between the buoyant body and the cage and configured for moving the cage between a position at the level of, or below, the buoyant body and a position in which at least a portion of the cage is above the buoyant body.

There is a need for an improved fish farming facility to reduce or eliminate the above-mentioned disadvantages of known techniques. It is an objective of the present invention to achieve this and to provide further advantages over the state of the art.

### SUMMARY

It is an object of the present invention to mitigate, alleviate or eliminate one or more of the above-identified deficiencies and disadvantages in the prior art and solve at least the above-mentioned problem.

According to the invention defined in claim 1, there is provided a floating fish farming facility comprising:
- an enclosure for fish comprising a base, a sidewall, and an upper portion; and
- a floating collar for floating on the surface of a body of water, the floating collar at least partly encircling the enclosure in a horizontal plane. At least one motor is positioned on the enclosure for powering a controlled movement of the enclosure up and down relative to the floating collar. At least one force transmitting member extends from the motor via a base connection point to a floating collar connection point.

According to an embodiment of the invention the motor comprises a winch and the force transmitting member comprises a cable.

According to an embodiment of the invention, the base connection point is a pulley. According to an embodiment of the invention the motor is provided on the upper portion of the enclosure.

According to an embodiment of the invention the upper portion comprises a walkway and the motor is provided on the walkway.

According to an embodiment of the invention, the base of the enclosure comprises a buoyancy element for increasing the buoyancy of the enclosure.

According to an embodiment of the invention the enclosure is a generally rigid structure provided with a rigid sidewall.

According to an embodiment of the invention, the floating fish farming facility comprises four motors and four respective force transmitting members.

The present invention will become apparent from the detailed description given below. The detailed description and specific examples disclose preferred embodiments of the invention by way of illustration only. Those skilled in the art understand from guidance in the detailed description that changes and modifications may be made within the scope of the invention.

### BRIEF DESCRIPTION OF THE DRAWINGS

The above objects, as well as additional objects, features and advantages of the present invention, will be more fully appreciated by reference to the following illustrative and non-limiting detailed description of example embodiment of the present invention, when taken in conjunction with the accompanying figures.
- Fig. 1: shows a perspective view of an embodiment of a floating fish farming facility where the enclosure is in a lower position;
- Fig. 2a: shows a side view of a floating fish farming facility where the enclosure is in a lower position; and
- Fig. 2b: shows a side view of a floating fish farming facility where the enclosure is in an upper position.

### DETAILED DESCRIPTION

The present invention will now be described with reference to the accompanying drawings, in which preferred example embodiments of the invention are shown. The invention may, however, be embodied in other forms and should not be construed as limited to the herein disclosed embodiments. The disclosed embodiments are provided to fully convey the scope of the invention to the skilled person.

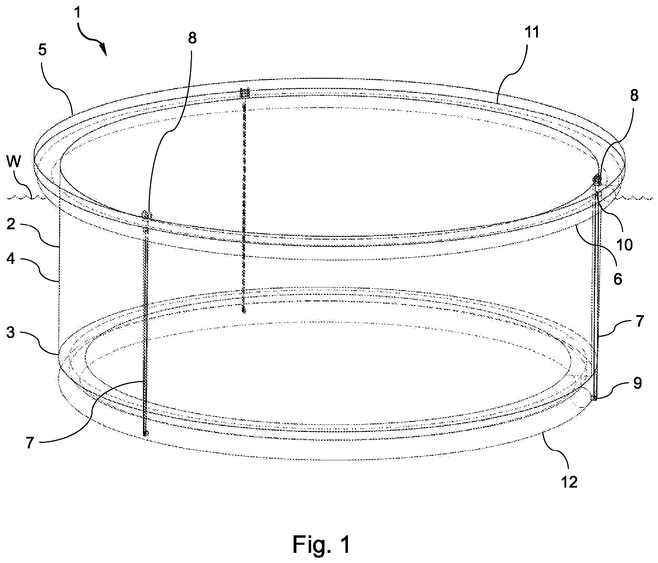

Referring initially to figure 1, a floating fish farming facility 1 is shown. The floating fish farming facility 1 is configured for floating in a body of water having a surface W. The floating fish farming facility 1 comprises an enclosure 2 for fish. The enclosure 2 comprises a base 3, a sidewall 4 and an upper portion 5. The enclosure 2 is in the illustrated embodiment cylindrical but may as such have any shape. A cylindrical shape may also comprise an angulate shape such as an enclosure having a hexagonal or octagonal horizontal cross section.

The enclosure 2 is preferably open at the upper portion 5, and the enclosure 2 is a rigid structure or substantially comprises rigid sections. The base 3 may as such be rigid and water impermeable, and comprise an opening (not shown) for allowing e.g. water to flow into the enclosure 2. The sidewall 4 may also be substantially rigid and water impermeable, and comprise openings (not shown) for allowing e.g. water to flow out of the enclosure 2. The openings may comprise a water permeable material to prevent fish from escaping the enclosure 2, and outside organisms to enter the enclosure 2. A rigid enclosure 2 may also comprise a rigid framework, where a net or similar water permeable fabric prevents fish from escaping the enclosure 2.

In order to keep the fish farming facility 1 floating, a floating collar 6 is at least partly encircling the enclosure 2 in a horizontal plane. The floating collar 6 may be a homogenous buoyant structure encircling the enclosure 2, or it may be several buoyant elements connected together around the enclosure 2. The floating collar 6 is preferably configured to move somewhat relative to the enclosure 2, such that impacts from waves and tidal forces are not directly transferred from the floating collar 6 to the enclosure 2. The floating collar 6 is configured for floating on the surface W of a body of water, and as the enclosure 2 is connected to the floating collar 6, it keeps the enclosure 2 positioned in the body of water. The floating collar 6 is advantageously anchored to the sea bottom. A floating collar is known in the art of floating fish farming facilities, and the floating collar 6 is not described in further detail.

A force transmitting member 7 connects the enclosure 2 to the floating collar 6. The force transmitting member 7 is at one end connected to a motor 8 arranged on the enclosure 2, and at the other end connected to the floating collar 6. In the illustrated embodiment, the force transmitting member 7 is a cable, and the motor 8 is a winch. The motor 8 may be a hydraulic winch. Alternatively, the force transmitting member 7 may be one or more chains or belts, and the motor 8 may be a motor connected to e.g. a cogwheel. The motor 8 converts energy into movement, and it may be e.g. powered by fuel or electricity. The motor 8 may thus be powered from a source that powers other systems on the enclosure 2. The force transmitting member 7 is configured to transfer tensile forces and may not be configured to transfer compression forces.

In the illustrated embodiment, the floating fish farming facility 1 comprises three sets of force transmitting members 7 and motors 8, each set spaced apart evenly around the circumference of the enclosure 2. The floating fish farming facility 1 may, however, comprise any number of force transmitting members 7 and motors 8, but at least one motor 8 and at least one respective force transmitting member 7. Preferably, the floating fish farming facility 1 comprises four motors 8 and four respective force transmitting members 7.

The motor 8 powers a controlled movement of the enclosure 2 up and down relative to the floating collar 6, and in an alternative embodiment, one motor 8 may power several force transmitting member 7. The motor 8 may be arranged on the upper portion 5 of the enclosure 2. The upper portion 5 may comprise a walkway 11, and the motor 8 may advantageously be positioned on the walkway 11. Contrary to common teaching and existing systems, the arrangement of the motor 8 on the enclosure 2 has several benefits. The motor 8 adds weight and its lifting force to the system to be lifted but arranging the motor 8 on the enclosure 2 may add significant advantages in terms of operating and accessibility and provide for easy access for personnel and operators. The upper portion 5 of the enclosure 2 is often both rigid and spacious, and thus both installation and maintenance of the motor 8 can be carried out more easily. The disadvantage of added weight and force can be compensated by the force transmitting member 7 by including e.g. several pulleys or several gears, and thus ensuring high gearing and lifting ratio between the enclosure 2 and the floating collar 6. Given a high enough lifting ration, even a small and light motor 8 may provide enough lifting capacity to lift itself and the enclosure 2.

The force transmitting member 7 of the illustrated embodiment is connected to the motor 8 and extends from the motor 8 via a base connection point 9 to a floating collar connection point 10. The base connection point 9 is preferably arranged at the base 3 of the enclosure 2, such that the entire internal volume of the enclosure 2 may be lifted up and above the water surface W. The base connection point 9 may be provided below the base 3 in order to provide sufficient elevation of the enclosure 2. The distance between the base connection point 9 and the respective motor 8 is fixed. This may be achieved by a rigid enclosure 2, or a by a rigid framework, to which e.g. a net pen is fastened, as described previously.

The base connection point 9 is in the illustrated embodiment a pulley. The force transmitting member 7 extends in the illustrated embodiment from the motor 8 through the base connection point 9 and may be fixed to the floating collar connection point 10 on the floating collar 6.

The base 3 of the enclosure 2 may comprise a buoyancy element 12 for increasing the buoyancy of the enclosure 2, and thus reduce the required lifting capacity of the force transmitting member 7 and the motor 8. The buoyancy element 12 may be a pontoon or similar element with a positive buoyancy. The buoyancy element 12 may preferably be positioned on the underside of the base 3, or adjacent the base 3.

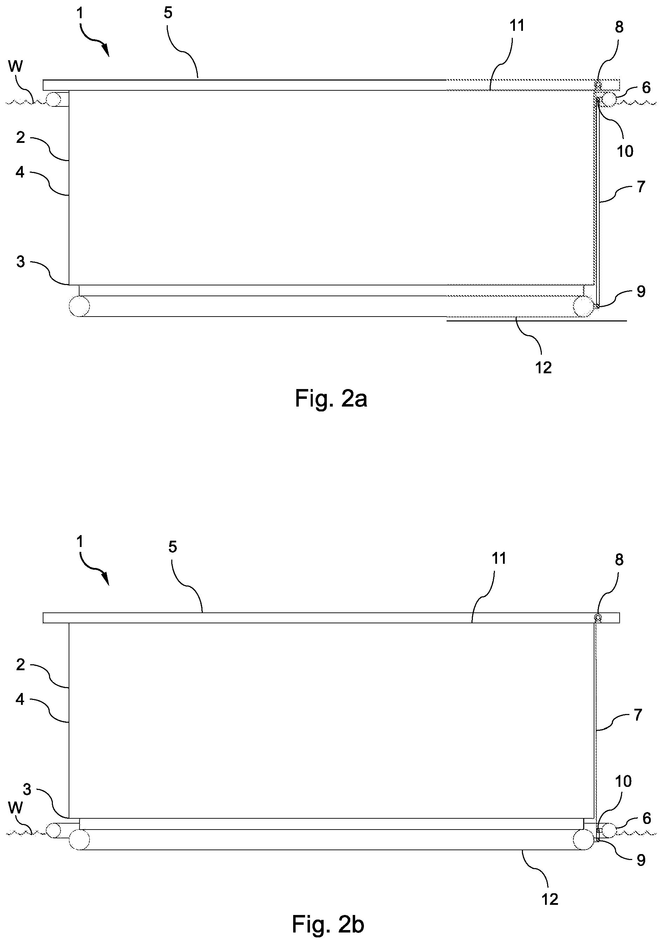

Referring now to figure 2a, a floating fish farming facility 1 where the enclosure 2 is in a lower position, is shown. The upper portion 5 and the walkway 11 is positioned right above and adjacent the floating collar 6, floating on the surface W of a body of water. In order to lift the enclosure 2, the motor 8, in the illustrated embodiment a winch, hoists up the force transmitting member 7, in the illustrated embodiment a cable. The force transmitting member 7 extends from the motor 8 via the base connection point 9 and is fixed to the floating collar connection point 10. As the force transmitting member 7 is hoisted up towards the motor 8 and the distance between the motor 8 to the base connection point 9 is fixed, the force transmitting member 7 forces the base connection point 9 upwards, and the enclosure 2 is lifted. This principle requires that the weight of the enclosure do not exceed the buoyancy of the floating collar 6 and alternatively also the buoyancy element 12, such that upon hoisting in the force transmitting member 7, the enclosure 2 is lifted instead of the floating collar 6 being submerged.

Referring now to figure 2b, a floating fish farming facility 1 where the enclosure 2 is lifted to an upper position is shown. The base 3 may in the upper position be positioned at or preferably just above the surface W of water, and the buoyancy element 12 is in this position preferably in the body of water, providing positive buoyancy. The force transmitting member 7 has been hoisted up at the motor 8, such that the base connection point 9 has been lifted towards the floating collar connection point 10, and the enclosure 2 has thus been lifted.

Upon feeding out the force transmitting member 7 from the motor 8, the enclosure 2 may be lowered towards the lower position in figure 2a.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A floating fish farming facility (1) comprising:
- a rigid enclosure (2) for fish comprising a base (3), a sidewall (4) and an upper portion (5); and
- a floating collar (6) for floating on the surface (W) of a body of water, the floating collar (6) at least partly encircling the rigid enclosure (2) in a horizontal plane,
**characterised in that**
the floating fish farming facility (1) comprising:
- at least one motor (8) positioned on the rigid enclosure (2) for powering a controlled movement of the at least one motor (8) and the rigid enclosure (2) up and down relative to the floating collar (6); and
- at least one force transmitting member (7) extending from the motor (8) via a base connection point (9) arranged at the base (3) or below the base (3) of the rigid enclosure (2) to a floating collar connection point (10) arranged at the floating collar (6).

2. The floating fish farming facility (1) of claim 1, where the motor (8) comprises a winch and the force transmitting member (7) comprises a cable.

3. The floating fish farming facility (1) of claim 1 or 2, where the base connection point (9) is a pulley.

4. The floating fish farming facility (1) of any one of the preceding claims, where the motor (8) is provided on the upper portion (5) of the rigid enclosure (2).

5. The floating fish farming facility (1) of any one of the preceding claims, where the upper portion (5) comprises a walkway (11) and the motor (8) is provided on the walkway (11).

6. The floating fish farming facility (1) of any one of the preceding claims, where the base (3) of the rigid enclosure (2) comprises a buoyancy element (12) for increasing the buoyancy of the rigid enclosure (2).

7. The floating fish farming facility (1) of any one of the preceding claims, where the rigid enclosure (2) is a generally rigid structure provided with a rigid sidewall (4).

8. The floating fish farming facility (1) of any one of the preceding claims, where the floating fish farming facility (1) comprises four motors (8) and four respective force transmitting members (7).

## Patentansprüche

1. Schwimmende Fischzuchtanlage (1), umfassend:
- ein festes Gehäuse (2) für Fische, das eine Basis (3), eine Seitenwand (4) und einen oberen Abschnitt (5) umfasst; und
- einen schwimmenden Kragen (6) zum Schwimmen an der Oberfläche (W) eines Gewässers, wobei der schwimmende Kragen (6) das feste Gehäuse (2) in einer horizontalen Ebene zumindest teilweise umschließt,
**dadurch gekennzeichnet, dass**
die schwimmende Fischzuchtanlage (1) Folgendes umfasst:
- mindestens einen Motor (8), der auf dem festen Gehäuse (2) gelegen ist, um eine gesteuerte Bewegung des mindestens einen Motors (8) und des festen Gehäuses (2) nach oben und nach unten in Bezug auf den schwimmenden Kragen (6) anzutreiben; und
- mindestens ein Kraftübertragungselement (7), das sich über einen an der Basis (3) oder unterhalb der Basis (3) des festen Gehäuses (2) eingerichteten Basisverbindungspunkt (9) vom Motor (8) zu einem am schwimmenden Kragen (6) eingerichteten Verbindungspunkt (10) des schwimmenden Kragens erstreckt.

2. Schwimmende Fischzuchtanlage (1) nach Anspruch 1, wobei der Motor (8) eine Winde umfasst und das Kraftübertragungselement (7) ein Kabel umfasst.

3. Schwimmende Fischzuchtanlage (1) nach Anspruch 1 oder 2, wobei der Basisverbindungspunkt (9) eine Rolle ist.

4. Schwimmende Fischzuchtanlage (1) nach einem der vorstehenden Ansprüche, wobei der Motor (8) am oberen Abschnitt (5) des festen Gehäuses (2) bereitgestellt ist.

5. Schwimmende Fischzuchtanlage (1) nach einem der vorstehenden Ansprüche, wobei der obere Abschnitt (5) einen Gehsteig (11) umfasst und der Motor (8) auf dem Gehsteig (11) bereitgestellt ist.

6. Schwimmende Fischzuchtanlage (1) nach einem der vorstehenden Ansprüche, wobei die Basis (3) des festen Gehäuses (2) ein Auftriebsteil (12) zum Vergrößern des Auftriebs des festen Gehäuses (2) umfasst.

7. Schwimmende Fischzuchtanlage (1) nach einem der vorstehenden Ansprüche, wobei das feste Gehäuse (2) eine allgemein feste Struktur ist, die mit einer festen Seitenwand (4) bereitgestellt ist.

8. Schwimmende Fischzuchtanlage (1) nach einem der vorstehenden Ansprüche, wobei die schwimmende Fischzuchtanlage (1) vier Motoren (8) und vier jeweilige Kraftübertragungselemente (7) umfasst.

## Revendications

1. Installation de pisciculture flottante (1) comprenant :
- une enceinte rigide (2) pour des poissons comprenant une base (3), une paroi latérale (4) et une partie supérieure (5) ; et
- un collier flottant (6) pour flotter à la surface (W) d'une masse d'eau, le collier flottant (6) entourant au moins partiellement l'enceinte rigide (2) dans un plan horizontal,
**caractérisée en ce que**
l'installation de pisciculture flottante (1) comprend :
- au moins un moteur (8) disposé sur l'enceinte rigide (2) pour entraîner un mouvement commandé de l'au moins un moteur (8) et de l'enceinte rigide (2) de haut en bas par rapport au collier flottant (6) ; et
- au moins un organe transmetteur de force (7) s'étendant depuis le moteur (8) via un point de liaison de base (9) agencé au niveau de la base (3) ou au-dessous de la base (3) de l'enceinte rigide (2) jusqu'à un point de liaison (10) du collier flottant agencé au niveau du collier flottant (6).

2. Installation de pisciculture flottante (1) selon la revendication 1, où le moteur (8) comprend un treuil et l'organe transmetteur de force (7) comprend un câble.

3. Installation de pisciculture flottante (1) selon la revendication 1 ou la revendication 2, où le point de liaison de base (9) est une poulie.

4. Installation de pisciculture flottante (1) selon l'une quelconque des revendications précédentes, où le moteur (8) est prévu sur la partie supérieure (5) de l'enceinte rigide (2).

5. Installation de pisciculture flottante (1) selon l'une quelconque des revendications précédentes, où la partie supérieure (5) comprend une passerelle (11) et le moteur (8) est prévu sur la passerelle (11).

6. Installation de pisciculture flottante (1) selon l'une quelconque des revendications précédentes, où la base (3) de l'enceinte rigide (2) comprend un élément de flottabilité (12) pour augmenter la flottabilité de l'enceinte rigide (2).

7. Installation de pisciculture flottante (1) selon l'une quelconque des revendications précédentes, où l'enceinte rigide (2) est une structure généralement rigide pourvue d'une paroi latérale (4) rigide.

8. Installation de pisciculture flottante (1) selon l'une quelconque des revendications précédentes, où l'installation de pisciculture flottante (1) comprend quatre moteurs (8) et quatre organes transmetteurs de force (7) respectifs.
